(19) Europäisches Patentamt
European Patent Office
Office européen des brevets

(11) Publication number: **0 201 164 B1**

(12) **EUROPEAN PATENT SPECIFICATION**

(45) Date of publication of patent specification: **30.09.92**

(51) Int. Cl.[5]: **C08F 255/02**, C10M 143/00, C10M 143/02, C10M 149/10, C10M 151/02

(21) Application number: **86301676.2**

(22) Date of filing: **10.03.86**

(54) **Polyolefin graft polymers and lubricating compositions containing them.**

(30) Priority: **29.04.85 US 728635**

(43) Date of publication of application:
**12.11.86 Bulletin 86/46**

(45) Publication of the grant of the patent:
**30.09.92 Bulletin 92/40**

(84) Designated Contracting States:
**BE DE FR GB IT NL SE**

(56) References cited:

| | |
|---|---|
| **EP-A- 0 087 234** | **EP-A- 0 199 453** |
| **GB-A- 946 663** | **GB-A- 1 244 435** |
| **US-A- 3 067 163** | **US-A- 3 872 019** |

(73) Proprietor: **TEXACO DEVELOPMENT CORPORATION**
**2000 Westchester Avenue**
**White Plains, New York 10650(US)**

(72) Inventor: **Kapuscinski, Maria Magdalena**
**72 Rambler Road**
**Rd 3, Carmel, N.Y. 10512(US)**
Inventor: **Liu, Christopher Soundang**
**43 Saddlerock Drive**
**Poughkeepsie, N.Y. 12603(US)**
Inventor: **Hart, William Pius**
**509-8 Harding Rd.**
**Freehold, N.J. 07728(US)**
Inventor: **Grina, Larry Dale**
**57 Brandy Lane**
**Wappingers Falls, N.Y. 12590(US)**

(74) Representative: **Ben-Nathan, Laurence Albert et al**
**Urquhart-Dykes & Lord 91 Wimpole Street**
**London W1M 8AH(GB)**

EP 0 201 164 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to graft polymers, more especially, graft polymers derived from oil-soluble linear carbon-carbon backbone polymers grafted on which are units derived from a functional monomer obtained by reacting an unsaturated aldehyde or ketone with an amine having at least one nitrogen atom in a heterocyclic ring. These graft polymers are suitable as additives for hydrocarbons, including hydrocarbon lubricating oils, and provide improved properties for such hydrocarbons.

As is well known to those skilled in the art, hydrocarbon fuels and lubricating oils must be formulated, e.g. by addition of various additives, so as to improve their properties.

It is found that lubricating oils, such as those employed in railway, automotive, aircraft or marine service, become degraded during use, due inter alia to formation of sludge, which may be generated by deterioration of the oil or by introduction of undesirable components from other sources, including the fuel or the combustion air. In order to maintain and improve the properties of the lubricating oil, various additives have heretofore been provided; and these have been intended to improve such properties as the viscosity index, dispersancy or oxidative stability.

A viscosity index improver and dispersant additive with an oxidized degraded copolymer of ethylene and propylene as a backbone for a vinyl ester of a saturated carboxylic acid, an N-vinyl lactam or an N-oxohydrocarbon are taught in GB-A-1244 435.

US-A-3872 019 teaches the use of an oil additive which comprises an ethylene-propylene backbone polymer grafted with a formaldehyde reactant and a primary or secondary aliphatic amine.

It is an object of this invention to provide a new additive system which can be incorporated into hydrocarbon lubricating compositions.

In one embodiment, this invention provides a graft polymer comprising an oil-soluble, substantially linear, carbon-carbon backbone polymer having graft polymerized thereon units derived from a functional monomer which is the reaction product of (i) an ethylenically unsaturated aldehyde or ketone, and (ii) a primary or secondary amine which contains at least one nitrogen atom in a heterocyclic ring, with the proviso that the monomer is not the reaction product of crotonaldehyde and N-(3-aminopropyl) morpholine which has been functionalized with phenothiazine if the backbone polymer is an ethylene-propylene copolymer.

This invention also provides a process for the production of such graft polymers, and hydrocarbon compositions containing such graft polymers as additives.

The charge polymer which may be employed as the graft base in the process of this invention is an oil-soluble, substantially linear, carbon-carbon backbone polymer. Typical polymers prepared from monomers bearing an ethylenically unsaturated polymerizable double bond which may be employed include homopolymers or copolymers prepared from monomers containing the groupings

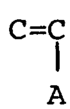 and/or 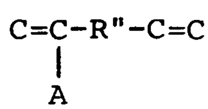

wherein A may be, for example, hydrogen; hydrocarbon such as alkyl or aryl; carboxy, or derivatives thereof; or halogen. R" may be a single bond or a divalent hydrocarbon group, typified by alkylene, alkarylene, aralkylene, cycloalkylene or arylene. Illustrative of such monomers are acrylates; methacrylates; vinyl halides (such as vinyl chloride); styrene; olefins (such as ethylene, propylene or butylene); and dienes (such as butadiene, isoprene, hexadiene or ethylidene norbornene). Although homopolymers of olefins (such as polyethylene, polypropylene or polyisobutylene), or copolymers or ethylene with e.g. butylene and higher olefins may be employed, the preferred carbon-carbon backbone polymers include ethylene-propylene copolymers (EPM or EPR) and ethylene-propylene-diene terpolymers (EPDM or EPT).

The molecular weight $\overline{M}_n$ of the copolymers or terpolymers which may be employed is preferably 10,000 to 1,000,000, more preferably 20,000 to 200,000, e.g. 100,000. The molecular weight distribution (polydispersity index) $\overline{M}_w/\overline{M}_n$ is preferably less than 15, more preferably 1.5 to 10, e.g. 2.

Suitable ethylene-propylene copolymers may be formed by copolymerization of ethylene and propylene under known conditions, preferably Ziegler-Natta reaction conditions. The preferred EPM copolymers contain units derived from the ethylene in amounts of 40 to 70 mole %, more preferably 50 to 60 mole %, e.g. 55 mole %, the remainder being derived from propylene.

Illustrative EPM copolymers which may be employed in the practice of this invention are set out below,

the first listed being preferred:

A. EPSYN® (Copolymer Rubber and Chemical Corp.), containing 60 mole % of units derived from ethylene and 40 mole % of units derived from propylene; $\overline{M}_n$ : 140,000, $\overline{M}_w/\overline{M}_n$ : 1.6;

B. EPCAR 505® (B.F. Goodrich Co.), containing 50 mole % of units derived from ethylene and 50 mole % of units derived from propylene, $\overline{M}_n$ : 25,000; $\overline{M}_w/\overline{M}_n$ : 2.5;

C. ESPRENE® (Sumitomo Chemical Co.), containing 55 mole % of units derived from ethylene and 45 mole % of units derived from propylene; $\overline{M}_n$ : 25,000, $\overline{M}_w/\overline{M}_n$ : 2.5.

Suitable ethylene-propylene terpolymers may be formed by copolymerization of ethylene, propylene and a third monomer. The third monomer is commonly a non-conjugated diene, such as dicyclopentadiene; 1,4-hexadiene; or ethylidene norbornene. Polymerization is effected under known conditions generally comparable to those employed in preparing the EPM products. The preferred terpolymers contain units derived from ethylene in amounts of 40 to 70 mole %, more preferably 50 to 65 mole %, e.g. 60 mole %, units derived from the propylene in amounts of 20 to 60 mole %, more preferably 30 to 50 mole %, e.g. 38 mole %, and units derived from diene third monomer in amounts of 0.5 to 15 mole %, more preferably 1 to 10 mole %, e.g. 2 mole %.

Illustrative EPT terpolymers which may be employed in the practice of this invention are set out below, the first listed being preferred.

A. EPSYN 4006® (Copolymer Rubber and Chemical Corp.), containing 58 mole % of units derived from ethylene, 40 mole % of units derived from propylene, and 2 mole % of units derived from ethylidene norbornene; $\overline{M}_n$ : 120,000 and $\overline{M}_w/\overline{M}_n$ : 2.2.

B. ORTHOLEUM® 5655 (DuPont), containing 62 mole % of units derived from ethylene, 36 mole % of units derived from propylene, and 2 mole % of units derived from 1,4-hexadiene; $\overline{M}_n$ : 80,000 and $\overline{M}_w/\overline{M}_n$ : 2.

C. ORTHOLEUM® 2052 (DuPont), containing 62 mole % of units derived from ethylene, 36 mole % of units derived from propylene, and 2 mole % of units derived from 1,4-hexadiene, $\overline{M}_n$ : 35,000 and $\overline{M}_w/\overline{M}_n$ : 2.

D. ROYALENE® (Uniroyal) containing 60 mole % of units derived from ethylene, 37 mole % of units derived from propylene, and 3 mole % of units derived from dicyclopentadiene; $\overline{M}_n$ : 100,000 and $\overline{M}_w/\overline{M}_n$ : 2.5.

E. EPSYN® 40A containing 60 mole % of units derived from ethylene, 37 mole % of units derived from propylene, and 3 mole % of units derived from ethylidene norbornene; $\overline{M}_n$ : 140,000 and $\overline{M}_w/\overline{M}_n$ : 2.

The EPM and EPT polymers may contain minor portions (typically less than 30%) of other units derived from other copolymerizable monomers.

In the process of this invention, there are grafted onto these oil-soluble, substantially linear carbon-carbon, backbone polymers, graft units derived functional units derived from the reaction product of (i) an ethylenically unsaturated aldehyde or ketone, and (ii) a primary or secondary amine which contains at least one nitrogen atom in a heterocyclic ring.

The carbonyl compounds (aldehydes or ketones) which may be used according to this invention may have the formula:

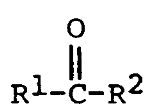

wherein $R^1$ and $R^2$, which can be the same or different, are unsubstituted or inertly-substituted hydrocarbyl, or $R^1$ can be hydrogen, but at least one of $R^1$ and $R^2$ is ethylenically-unsaturated hydrocarbyl, or $R^1$ and $R^2$, together with the carbonyl group represent the atoms necessary to complete a cycloalkenone ring.

Unsubstituted or inertly-substituted hydrocarbyl can be alkyl, aralkyl, cycloalkyl, aryl, alkaryl, or alkenyl. When $R^1$ is alkyl, it may typically be methyl, ethyl, n-propyl, iso-propyl, n-butyl, i-butyl, sec-butyl, amyl, octyl, decyl or octadecyl. When $R^1$ is aralkyl, it may be benzyl or beta-phenylethyl. When $R^1$ is cycloalkyl it may be cyclohexyl, cycloheptyl, cyclooctyl, 2-methylcycloheptyl, 3-butylcyclohexyl or 3-methylcyclohexyl. When $R^1$ is aryl, it may be phenyl or naphthyl. When $R^1$ is alkaryl, it may be tolyl or xylyl. When $R^1$ is alkenyl, it may be vinyl, allyl or 1-butenyl. $R^1$ may be inertly substituted, i.e. it may bear a non-reactive substituent such as alkyl, aryl or cycloalkyl. Typically inertly substituted $R^1$ groups include 3-chloropropyl, 2-ethoxyethyl, carboethoxymethyl or 4-methyl cyclohexyl. The preferred $R^1$ groups are lower alkenyl, i.e. $C_2$-$C_{10}$ alkenyl, e.g. ethenyl, n-propenyl or preferably butenyl.

$R^2$ may have the same meaning as $R^1$, excluding hydrogen, or $R^1$ and $R^2$ may, together with the carbonyl group form an unsaturated cycloalkenone group, e.g. cyclohexenone. At least one of $R^1$ and $R^2$ is an ethylenically unsaturated hydrocarbon.

The ethylenically unsaturated carbonyl compound is a ketone or, more preferably, an aldehyde. Typical ketones include:
benzalacetophenone
but-1-en-3-one
hex-1-en-3-one
pent-3-en-2-one or
hex-5-en-2-one

Preferably the carbonyl compound is an ethylenically unsaturated aldehyde, e.g.
crotonaldehyde
cinnamaldehyde
acrolein or
methacrolein

The amine which is reacted with the ethylenically unsaturated aldehyde or ketone is a primary or secondary amine which contains at least one nitrogen atom in a heterocyclic ring. Typical compounds include those bearing: pendant primary amine groups, e.g. N-(3-aminopropyl) morpholine; pendant secondary amine groups, e.g. N-(3-propylaminopropyl) morpholine; or in-ring secondary amine groups, e.g. piperazine.

It preferably has the formula

$R^3R^4NH$

wherein $R^3$ and $R^4$, which may be the same or different, are hydrogen, unsubstituted or inertly-substituted hydrocarbyl, or a nitrogen-containing heterocyclic group, at least one of $R^3$ and $R^4$ being a nitrogen-containing heterocyclic group, or $R^3$ and $R^4$, together with the NH group to which they are attached, constitute a nitrogen-containing heterocyclic group.

Preferred primary amines include:
N-(3-aminopropyl) morpholine
N-(3-aminopropyl)-2-pipecoline
N-(3-aminopropyl) pyrrolidone
2-aminobenzothiazole
2-aminopyrimidine
2-amino-3-picoline and
4-amino-2,6-dimethyl pyrimidine

Preferred secondary amines include:
N-methylpiperazine
morpholine
pyrrolidine
2,6-dimethylmorpholine
N-(betahydroxyethyl)-piperazine and
phenothiazine

In a preferred embodiment, the functional monomer may be prepared by the reaction of an unsaturated aldehyde such as crotonaldehyde and a secondary amine which is free of unsaturation, such as pyrrolidine.

The functional monomer composition used according to this invention may be prepared by adding to a reaction mixture (i) an unsaturated carbonyl compound, preferably an unsaturated aldehyde, (ii) a primary or secondary amine, containing at least one nitrogen atom in the heterocyclic ring, preferably a heterocyclic amine and (iii) a basic catalyst or a dehydrating agent.

The basic catalysts which may be employed typically include:
potassium carbonate
sodium carbonate
sodium hydroxide
potassium hydroxide and
tributylamine

The functional monomer composition may be prepared by adding to a reaction mixture (i) substantially equimolar portions of carbonyl compound and amine, (ii) an optional solvent, e.g. tetrahydrofuran, dimethylacetamide, dioxane or octanol, and (iii) catalyst in amount of typically 5 to 100 wt.%, e.g. 20 wt.%

of the total of the reactants. The reaction mixture is preferably maintained at 0 to 25°C for 1 to 3 hours, and the catalyst is separated by filtration. The product may be purified by distillation under vacuum or it may be used without further purification.

Alternatively, a dehydrating agent, typically a molecular sieve, may be employed. Typical dehydrating agents include:

molecular sieve
silica gel
magnesium sulfate
sodium sulfate or
calcium chloride

The desired product can thus be prepared by adding to a reaction mixture (i) substantially equimolar amounts of carbonyl compound and amine, (ii) an optional solvent e.g. tetrahydrofuran, dimethylacetamide, dioxane, or octanol, and (iii) dehydrating agent, such as molecular sieve, preferably in an amount of 10 to 100 wt.%, e.g. 30 wt.% of the total of the reactants. The reaction mixture is preferably maintained at 60 to 200°C, e.g. 100°C for 1 to 3 hours with agitation, preferably under an inert atmosphere such as nitrogen. Work-up may be as for the technique using basic catalyst.

In the process of this invention, the functional monomer composition is graft polymerized onto the base polymer.

In the process of this invention, 100 parts by weight of charge EPM or EPT may be added to 100 to 1000 parts by weight, e.g. 300 parts by weight of solvent. Typical solvents are hydrocarbon solvent such as n-hexane or n-heptane, tetrahydrofuran, or mineral oil. A preferred solvent is commercial hexane containing principally n-hexane isomers. The reaction mixture may then be heated e.g. to a temperature of 60 to 180°C, more preferably 150 to 170°C e.g. 155°C at a pressure of preferably 0.2 to 2.5 MPa, more preferably 1.3 to 1.6 MPa, e.g. 1.45 MPa.

The functional monomer, which is to serve as grafting monomer, is added, preferably in an amount of 1 to 40 parts by weight, e.g. 10 parts by weight, followed by a solution in hydrocarbon of a free radical initiator. Typical free radical initiators include dicumyl peroxide, di-t-butyl peroxide, benzoyl peroxide, di-isopropyl peroxide, and azobisisobutyronitrile. The solvent is preferably the same as that in which the EPM or EPT is dissolved. The initiator may preferably be added in an amount of 0.2 to 10 parts by weight, e.g. 4 parts by weight in 0.8 to 40 parts by weight, e.g. 16 parts by weight of solvent.

The free-radical initiator may be mixed with the graft solvent, monomer, and the polymer at a temperature below the decomposition temperature of the initiator. For instance, mixing may be carried out at below 40°C, more preferably 20°C to 40°C, e.g. 20°C. The reaction mixture is then raised to a temperature at least as high as the decomposition temperature of the initiator, e.g. 60°C or higher.

Reaction is typically carried out at 60 to 180°C, e.g. 155°C and 1.3 to 1.6 MPa, e.g. 1.45 MPa, during which time graft polymerization of the amine onto the base EPM or EPT polymer occurs.

Typical graft polymers contain one unit derived from graft monomer per 12.5 to 10,000, e.g. 167, carbon atoms of the charge backbone polymer. Alternatively expressed, there may be 0.1 to 80, e.g. 6 graft units per 1000 carbon atoms of polymer backbone.

For ease of handling, the polymerization solvent may be exchanged with a heavier solvent, such as SUS 100 oil. Product graft polymer is typically obtained as a solution of 6 to 12 parts by weight, e.g. 8.5 parts by weight thereof in 88 to 94 parts by weight, e.g. 91.5 parts by weight of solvent.

The product so formed may be an oil-soluble, substantially linear, carbon-carbon backbone polymer having a molecular weight $\overline{M}_n$ of preferably 10,000 to 1,000,000, more preferably 20,000 to 200,000, e.g. 80,000, having graft polymerized thereon (per 1000 carbon atoms of polymer backbone) 0.1 to 80 units, more preferably 1 to 15 units, e.g. 6 units derived from graft monomer.

Lubricating oils in which the dispersant viscosity index improvers of this invention may find use include automotive, aircraft, marine and railway oils; oils used in spark ignition or compression ignition engines; summer or winter oils. Typical lubricating oils have an ibp of 300 to 350°C, e.g. 320°C; an ep of 400 to 650°C, e.g. 550°C; and a density of 0.870 to 0.905 g/cm$^3$, e.g. 0.882 g/cm$^3$.

A typical lubricating oil in which the polymer of this invention may be present may be a standard SAE 5W-30 hydrocarbon motor oil formulation having the following composition:

| | weight % |
|---|---|
| Base Oil | 82 |
| -Viscosity Index Improver (10 weight % of ethylene-propylene copolymer in 90% weight % of inert oil) | 9 |
| -Standard Additive Package<br>Polyisobutenyl ($\overline{M}_n$ 1290) succinimide (dispersant);<br>Calcium sulfonate (detergent);<br>Zinc dithiophosphate (anti-wear);<br>di-nonyldiphenylamine (anti-oxidant);<br>4,4'-methylene-bis-(2,6-di-t-butyl phenol) (anti-oxidant). | 9 |

Use of the additive of this invention makes it possible readily to increase the viscosity index by 25 to 40 units, e.g. 35 units and to obtain improved ratings on the tests measuring the dispersancy of the system. The viscosity index is determined by ASTM Test D-445.

Dispersancy is determined by the Bench VC Test (BVCT). In this test, the turbidity of an oil containing an additive is measured after heating the test oil to which has been added a standard blow-by. The result, which correlates with dispersancy, is compared to three reference standards (Excellent, Good and Fair), tested simultaneously with the test sample. The numerical rating decreases with an increase in dispersant effectiveness. Results similar to or lower than that of the "Good" reference indicate that the additive is a good candidate.

It is possible to obtain product polymers which serve as multi-functional additives which permit attainment of a dispersant, anti-oxidant, viscosity index improver when added to a hydrocarbon lubricating oil or to a synthetic type lubricating oil.

The graft polymers of this invention may find use in lubricating oils as dispersant, anti-oxidant, viscosity index improvers when present in amounts of preferably 0.2 to 5 weight %, more preferably 0.4 to 3 weight %, e.g. 0.9 weight %.

This invention is further illustrated by the following Examples wherein, as elsewhere in this specification, all parts and percentages are by weight, unless otherwise set forth. Control examples are designated by an asterisk. Examples 1 to 4 set out the preparation of typical functional monomers, Examples 5 to 10 set out the preparation of typical graft polymers, and Examples 11 to 16 illustrate typical lubricant compositions and the properties thereof.

## EXAMPLE 1

In this example which represents the best mode at present known, a reaction mixture is formed from equimolar portions of crotonaldehyde (70 parts) and pyrrolidine (71 parts) and 70 parts of Aldridge brand Grade 12, molecular sieve as dehydrating agent. The reaction mixture under an inert nitrogen atmosphere, is heated with agitation at 100°C for 2 hours. The mixture is then cooled to room temperature and filtered to remove catalyst. The product functional monomer is used as go prepared without further purification.

## EXAMPLE 2

To a mixture of equimolar portions of N-methyl piperazine (100 parts) and potassium carbonate (34 parts), maintained at minus 5°C, there is added dropwise an equimolar portion (70 parts) of crotonaldehyde. The mixture is stirred at 0°C for 1 hour and then at 25°C for 3 hours. The solid is removed by filtration; and the unreacted starting materials are removed by vacuum distillation. The product functional monomer so prepared is used without further purification.

## EXAMPLE 3

In this example, the procedure of Example 1 is followed, except that the amine is N-(3-aminopropyl) morpholine (144 parts) (1 mole).

## EXAMPLE 4

In this example, the procedure of Example 1 is followed, except that the amine is 1-(3-aminopropyl)-2-pipecoline (156 parts) (1 mole).

EXAMPLE 5

In this example, the functional monomer product of Example 1 (the reaction product of crotonaldehyde and pyrrolidine) is grafted onto an ethylene-propylene copolymer (EPM) $\overline{M}_n$ of 120,000, containing 60 mole % derived from ethylene and 40 mole % derived from propylene.

100 parts of ethylene-propylene copolymer, dissolved in 400 parts of SUN-148 mineral oil as grafting solvent is heated to 155°C with stirring under nitrogen. 10 parts of the monomer product of Example 1 is added, followed by 4 parts of dicumyl peroxide dissolved in 12 parts of SUN-148 mineral oil grafting solvent. The mixture is stirred at 155°C for 1 hour. Solvent Neutral Oil 100 (SNO-100) is added to give a solution containing 8.5 weight % of polymer; and this solution is used as an additive for lubricating oil without further treatment.

EXAMPLE 6

In this example, the procedure of Example 5 is followed, except that the copolymer employed is Ortholeum 5655, a terpolymer of ethylene-propylene-1,4-hexadiene of molecular weight $\overline{M}_n$ of 75,000 and containing 64 mole % of units derived from propylene, 35 mole % of units derived from ethylene, and 1 mole % of units derived from 1,4-hexadiene.

EXAMPLE 7

In this example, the procedure of Example 5 is followed, except that the graft monomer is the reaction product of equimolar amounts of crotonaldehyde and N-methylpiperazine.

EXAMPLE 8

In this example, the procedure of Example 5 is followed, except that the backbone polymer is the same EPDM polymer used in Example 6 and the monomer grafted is the product of Example 2.

EXAMPLE 9

In this example, the procedure of Example 5 is followed except that the monomer grafted is the product of Example 3, the reaction product of crotonaldehyde and N-(3-aminopropyl) morpholine.

EXAMPLE 10

In this example, the procedure of Example 5 is followed except that the monomer grafted is the product of Example 4, the reaction product of crotonaldehyde and 1-(3-aminopropyl)-2-pipecoline.

EXAMPLES 11 to 16

In this series of Examples, the additive products prepared in Examples 5 to 10 are added in amounts of 10 weight % (corresponding to 0.85 weight % of active ingredient) to a fully formulated base blend containing the following components:

| Components | Weight % |
|---|---|
| SNO-130 Oil | 75.25 |
| SNO-320 Oil | 21.64 |
| Zinc dithiophosphate (anti-wear) | 1.12 |
| Naugalube® 438 (anti-oxidant) (4,4'-di-nonyl-di-phenyl amine) | 0.39 |
| Surchem® 521 (Mg sulfonate (detergent) | 1.50 |
| Silicone polymer (anti-foamant) | 150 ppm |

This oil had the following properties:

| Property | Value |
|---|---|
| Viscosity Kin 40°C cS | 31.50 |
| 100°C cS | 5.36 |
| Pour point °C | -15 |
| Ash sulphated % (ASTM D-874) | 0.93 |
| Phosphorus % (X-ray) | 0.11 |
| Sulphur % (X-ray) total | 0.40 |
| Zinc % (X-ray) | 0.12 |
| Magnesium % | 0.33 |
| Cold cranking simulator (cP @ -18°C) | 1660 |

Each of the products of Examples 5 to 10 so formulated with the fully formulated base blend is subjected to the Bench VC Test (BVCT) to determine their dispersancy.

The results are as set forth in the following table:

TABLE

| Example | Product | Result | Standards Excellent/Good/Poor |
|---|---|---|---|
| 11 | 5 | 23.2 | 10.0/29.9/70.0 |
| 12 | 6 | 23.6 | 8.0/29.4/68.0 |
| 13 | 7 | 36.2 | 7.9/29.4/60.6 |
| 14 | 8 | 16.3 | 8.0/29.4/68.0 |
| 15 | 9 | 46.5 | 12.6/38.0/66.5 |
| 16 | 10 | 35.4 | 2.9/25.4/60.6 |

From this table, it is clear that the dispersant, viscosity index improvers of this invention have good dispersant activity. They compare favourably with the dispersant activity of current commercial dispersant viscosity index improvers.

**Claims**

**1.** A graft polymer comprising an oil-soluble, substantially linear, carbon-carbon backbone polymer having graft polymerized thereon units derived from a functional monomer, characterized in that the functional monomer is the reaction product of (i) an unsaturated aldehyde or ketone and (ii) a primary or secondary amine which contains at least one nitrogen atom in a heterocyclic ring, with the proviso that the monomer is not the reaction product of crotonaldehyde and N-(3-aminopropyl) morpholine which has been functionalized with phenothiazine if the backbone polymer is an ethylene-propylene copolymer.

**2.** A graft polymer according to claim 1 characterized in that said backbone polymer is an ethylene-propylene copolymer or an ethylene-propylene-diene terpolymer.

**3.** A graft polymer according to claim 1 or 2 characterized in that the molecular weight $M_n$ of said backbone polymer is 10,000 to 1,000,000.

**4.** A graft polymer according to any preceding claim characterized in that the functional monomer is derived from an unsaturated aldehyde or ketone having the formula:

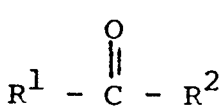

wherein $R^1$ and $R^2$, which can be the same or different, are unsubstituted or inertly-substituted hydrocarbyl, or $R^1$ can be hydrogen, but at least one of $R^1$ and $R^2$ is ethylenically-unsaturated hydrocarbyl, or $R^1$ and $R^2$, together with the carbonyl group represent the atoms necessary to complete a cycloalkenone ring.

**5.** A graft polymer according to claim 4 characterized in that the unsaturated aldehyde is crotonaldehyde, cinnamaldehyde, acrolein or methacrolein.

**6.** A graft Polymer according to claim 4 or 5 characterized in that the functional monomer is derived from a primary or secondary amine having the formula

$R^3R^4NH$

wherein $R^3$ and $R^4$, which may be the same or different, are hydrogen, unsubstituted or inertly-substituted hydrocarbyl, or a nitrogen-containing heterocyclic group, at least one of $R^3$ and $R^4$ being a nitrogen-containing heterocyclic group, or $R^3$ and $R^4$, together with the NH group to which they are attached, constitute a nitrogen-containing heterocyclic group.

**7.** A graft polymer according to claim 4 or 5 characterized in that the secondary amine is N-methylpiperazine, morpholine, pyrrolidine, 2,6-dimethylmorpholine, N-(betahydroxyethyl)-piperazine or phenothiazine.

**8.** A graft polymer according to any preceding claim characterized in that the functional monomer is prepared by reacting the unsaturated aldehyde or ketone, and the primary or secondary amine, in the presence of a basic catalyst or a dehydrating agent.

**9.** A graft polymer according to any preceding claim characterized in that the graft polymer is prepared by grafting the functional monomer on to the backbone polymer in a solvent and in the presence of a free radical initiator.

**10.** The use of graft polymers according to any of claims 1 to 9 as additives for lubricant compositions.

**Patentansprüche**

**1.** Pfropfpolymer mit einem öllöslichen, im wesentlichcn linearen Kohlenstoff-Kohlenstoff-Rückgratpolymer, auf das von einem funktionellen Monomer abgeleitete Einheiten propfpolymerisiert sind, dadurch gekennzeichnet, daß das funktionelle Monomer das Reaktionsprodukt aus (i) einem ungesättigten Aldehyd oder Keton und (ii) einem primären oder sekundären Amin, das wenigstens ein Stickstoffatom in einem heterozyklischen Ring enthält, ist, mit der Maßgabe, daß das Monomer nicht das Reaktionsprodukt von Crotonaldehyd und N-(3-Aminopropyl)morpholin ist, das mit Phenothiazin funktionalisiert worden ist, wenn das Rückgratpolymer ein Ethylen-Propylen-Copolymer ist.

**2.** Pfropfpolymer nach Anspruch 1, dadurch gekennzeichnet, daß besagtes Rückgratpolymer ein Ethylen-Propylen-Copolymer oder ein Ethylen-Propylen-Dien-Terpolymer ist.

**3.** Propfpolymer nach Anspruch 1 oder 2, dadurch gekennzeichnet, daß das Molekulargewicht $M_n$ besagten Rückgratpolymers 10.000 bis 1.000.000 ist.

**4.** Propfpolymer nach einem vorangehenden Anspruch, dadurch gekennzeichnet, daß das funktionelle Monomer abgeleitet ist von einem ungesättigten Aldehyd oder Keton mit der Formel:

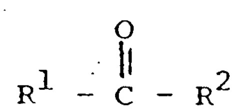

in der $R^1$ und $R^2$, die identisch oder verschieden sein können, unsubstituierte oder inert substituierte Kohlenwasserstoffreste sind oder $R^1$ Wasserstoff sein kann, aber wenigstens eine der Gruppen $R^1$ und

$R^2$ ein ethylenisch ungesättigter Kohlenwasserstoffrest ist oder $R^1$ und $R^2$, zusammen mit der Carbonylgruppe, die zur Vervollständigung eines Cykloalkenon-Ringes notwendigen Atome darstellen.

**5.** Pfropfpolymer nach Anspruch 4, dadurch gekennzeichnet, daß das ungesättigte Aldehyd Crotonaldehyd, Zimtaldehyd, Acrolein oder Methacrolein ist.

**6.** Pfropfpolymer nach Anspruch 4 oder 5, dadurch gekennzeichnet, daß das funktionelle Monomer abgeleitet ist von einem primären oder sekundären Amin mit der Formel

$R^3R^4NH$

in der $R^3$ und $R^4$, die identisch oder verschieden sein können, Wasserstoff, unsubstituierter oder inert substituierter Kohlenwasserstoffrest oder eine stickstoffhaltige heterozyklische Gruppe sind, wobei wenigstens eine der Gruppen $R^3$ und $R^4$ eine stickstoffhaltige heterozyklische Gruppe ist oder $R^3$ und $R^4$, zusammen mit der NH-Gruppe, an die sie gebunden sind, eine stickstoffhaltige heterozyklische Gruppe darstellen.

**7.** Pfropfpolymer nach Anspruch 4 oder 5, dadurch gekennzeichnet, daß das sekundäre Amin N-Methylpiperazin, Morpholin, Pyrrolidin, 2,6-Dimethylmorpholin, N-(Betahydroxyethyl)piperazin oder Phenothiazin ist.

**8.** Pfropfpolymer nach einem vorangehenden Anspruch, dadurch gekennzeichnet, daß das funktionelle Monomer dadurch hergestellt wird, daß das ungesättigte Aldehyd oder Keton und das primäre oder sekundäre Amin in Gegenwart eines basischen Katalysator oder eines Dehydratisierungsmittels zur Reaktion gebracht werden.

**9.** Pfropfpolymer nach einem vorangehenden Anspruch, dadurch gekennzeichnet, daß das Pfropfpolymer dadurch hergestellt wird, daß das funktionelle Monomer auf das Rückgratpolymer in einem Lösungsmittel und in Gegenwart eines Radikalinitiators aufgepfropft wird.

**10.** Verwendung von Pfropfpolymeren nach einem der Ansprüche 1 bis 9 als Additive für Schmierzusammensetzungen.

**Revendications**

**1.** Un polymère greffé comprenant un polymère oléosoluble à chaîne carbone-carbone essentiellement linéaire, comportant des unités polymérisées par greffe dérivées d'un monomère fonctionnel, caractérisé en ce que le monomère fonctionnel est le produit de la réaction entre (i) un aldéhyde insaturé ou une cétone et (ii) une amine primaire ou secondaire qui contient au moins un atome d'azote dans un composé hétérocyclique, à condition que le monomère ne soit pas le produit de la réaction entre le crotonaldéhyde et la N-(3-aminopropyl)morpholine qui a été fonctionnalisée avec de la phénothiazine si le polymère en chaîne est un copolymère éthylène-propylène.

**2.** Un polymère greffé conforme à la revendication 1 caractérisé en ce que ledit polymère en chaîne est un copolymère éthylène-propylène ou un terpolymère éthylène-propylène-diène.

**3.** Un polymère greffé conforme aux revendications 1 ou 2 caractérisé en ce que la masse moléculaire $M_n$ dudit polymère en chaîne est comprise entre 10.000 et 1.000.000

**4.** Un polymère greffé conforme à l'une quelconque des revendications précédentes caractérisé en ce que le monomère fonctionnel est dérivé d'un aldéhyde insaturé ou d'une cétone ayant la formule :

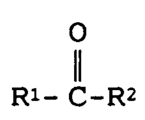

où $R^1$ et $R^2$, qui peuvent être identiques ou différents, sont de l'hydrocarbyle non substitué ou substitué

de manière inerte, ou $R^1$ peut être de l'hydrogène, mais au moins l'un parmi $R^1$ et $R^2$ est de l'hydrocarbyle insaturé en éthylène, ou $R^1$ et $R^2$, ainsi que le groupe carbonyle représentent les atomes nécessaires pour réaliser le cycle cycloalkénone.

**5.** Un polymère greffé conforme à la revendication 4 caractérisé en ce que l'aldéhyde insaturé est du crotonaldéhyde, du cinnamaldéhyde, de l'acroléine ou de la méthacroléine.

**6.** Un polymère greffé conforme aux revendications 4 ou 5 caractérisé en ce que le monomère fonctionnel est dérivé d'une amine primaire ou secondaire ayant la formule

$R^3R^4NH$

où $R^3$ et $R^4$, qui peuvent être identiques ou différents, sont de l'hydrogène, de l'hydrocarbyle non substitué ou substitué de manière inerte, ou un groupe hétérocyclique contenant de l'azote, au moins l'un parmi $R^3$ et $R^4$ étant un groupe hétérocyclique contenant de l'azote, ou $R^3$ et $R^4$, avec le groupe NH auquel ils sont attachés, constituent un groupe hétérocyclique contenant de l'azote.

**7.** Un polymère greffé conforme aux revendications 4 ou 5 caractérisé en ce que l'amine secondaire est de la N-méthyl-pipérazine, de la morpholine, de la pyrrolidine, de la 2,6-diméthylmorpholine, de la N-(bêtahydroxyéthyl)-pipérazine ou de la phénothiazine.

**8.** Un polymère greffé conforme à l'une quelconque des revendications précédentes caractérisé en ce que le monomère fonctionnel est préparé par réaction entre l'aldéhyde insaturé ou la cétone, et l'amine primaire ou secondaire, en présence d'un catalyseur basique ou d'un agent déshydratant.

**9.** Un polymère greffé conforme à l'une quelconque des revendications précédentes caractérisé en ce que le polymère greffé est préparé en greffant le monomère fonctionnel sur le polymère en chaîne dans un solvant en présence d'un initiateur de radical libre.

**10.** L'utilisation de polymères greffés conformes à l'une quelconque des revendications 1 à 9 comme additifs pour compositions lubrifiantes.